Europäisches Patentamt

European Patent Office

Office européen des brevets

(19)

(11) Veröffentlichungsnummer: **0 283 538**
**B1**

## (12) EUROPÄISCHE PATENTSCHRIFT

(45) Veröffentlichungstag der Patentschrift:
16.08.90

(21) Anmeldenummer: 87104470.7

(22) Anmeldetag: 26.03.87

(51) Int. Cl.⁵: **G01S 3/78**

(54) **Detektorvorrichtung.**

(43) Veröffentlichungstag der Anmeldung:
28.09.88 Patentblatt 88/39

(45) Bekanntmachung des Hinweises auf die Patenterteilung:
16.08.90 Patentblatt 90/33

(84) Benannte Vertragsstaaten:
BE CH DE ES FR GB IT LI NL SE

(56) Entgegenhaltungen:
EP-A- 0 057 447
DE-A- 2 634 627
DE-A- 3 525 518
FR-A- 82 045
FR-A- 2 372 438
GB-A- 2 112 244
US-A- 3 428 815
US-A- 3 601 488
(73) Patentinhaber: Messerschmitt-Bölkow-Blohm
Gesellschaft mit beschränkter Haftung,
Robert-Koch-Strasse, D-8012 Ottobrunn(DE)

(72) Erfinder: Halldorsson, Thorsteinn, Daphnestrasse 15,
D-8000 München 31(DE)
Erfinder: Selffarth, Ernst-August, Edelweissstr. 116,
D-8028 Taufkirchen(DE)
Erfinder: Manhart, Sigmund, Otto-Hahn-Strasse 51,
D-8013 Haar(DE)

## Beschreibung

Die Erfindung betrifft eine Detektorvorrichtung zur richtungsabhängigen Erfassung von Laserstrahlung gemäß dem Gattungsbegriff des Anspruchs 1.

Eine solche Detektorvorrichtung ist durch die DE-A 3 525 518 bekannt geworden. Bei dieser Einrichtung hat sich nun gezeigt, daß nicht nur durch eine Einzeloptik Laserstrahlung zum zugeordneten Paar der Lichtleiter gelangt, sondern auch über die benachbarten Einzeloptiken zu den dortigen Lichtleitpaaren. Das bedeutet, daß die zweite Detektorstufe nicht nur einen Hauptimpuls über die Einzeloptik und den zugeordneten zweiten Lichtleiter erhält – über den die stärkste Strahlung einfällt – sondern zusätzlich auch schwächere Lasersignale über die benachbarten Einzeloptiken und zweiten Lichtleiter detektiert werden. Dadurch erhält man neben dem Hauptlaserimpuls einen voreilenden schwächeren und einen nacheilenden schwächeren Laserimpuls. Zur Erlangung eines genauen azimutalen Raumwinkels der einfallenden Strahlung wird eine Interpolationsoperation durchgeführt, um den zeitlichen Schwerpunkt dieser Empfangsimpulse zu ermitteln. Ein Stoppsignal zur Beendigung der Laufzeitmessung wird hier durch eine gewichtete Mittelwertbildung der Ankunftszeiten einer Gruppe von Impulsen erhalten, die beim Empfang eines Laserimpulses durch mehrere benachbarte Einzeloptiken aufgrund der Gesichtsfeldüberlappung dieser Optiken von dem Wandler erzeugt werden, dem der Laserimpuls über die unterschiedlich langen Lichtleiter zugeführt wird.

Durch die EP-A 0 057 447 ist ein Verfahren und eine Vorrichtung zur Entfernungsmessung bekanntgeworden, die auf der Messung der Laufzeit eines Meßlichtimpulses beruhen, wobei diese Laufzeit anhand des Zeitabstandes jeweils eines ausgewählten Nulldurchgangs der Schwingungen ermittelt wird, die durch den Sende- und den Empfangsimpuls in einem Schwingkreis angeregt werden.

In dem vorgenannten Stand der Technik wird kein Hinweis darauf gegeben, wie man im Detail Azimut und Elevation gleichzeitig detektieren kann und eine Richtungsfindung über die an sich bekannte Messung der Laufzeit zu realisieren, wobei auch eine Interpolation über die Zeitmessung zwischen den einzelnen Blickrichtungen ermöglicht wird.

Der vorliegenden Erfindung liegt die Aufgabe zugrunde, eine Detektorvorrichtung der eingangs genannten Art zu schaffen, mit der eine exakte Winkelbestimmung mittels der Laufzeitmessung ermöglicht wird, ohne daß hierbei zeitliche und aufwendige Schwerpunktschaltungen notwendig sind und diese Winkelbestimmung nicht nur in der Azimutebene der einfallenden Laserstrahlung durchzuführen, sondern auch in Elevations-Richtung.

Diese Aufgabe wird durch die im Anspruch 1 aufgezeigten Maßnahmen gelöst. In den Unteransprüchen sind Ausgestaltungen und Weiterbildungen angegeben. In der nachfolgenden Beschreibung ist ein Ausführungsbeispiel erläutert, wobei die Figuren der Zeichnung diese Erläuterungen ergänzen.

Durch die in den Ansprüchen vorgeschlagenen Maßnahmen werden eine Reihe von zusätzlichen Vorteilen erzielt. So ist die Arbeitsweise der Detektorvorrichtung unabhängig von der Impulsamplitude, da im linearen Bereich des opto-elektrischen Wandlers gearbeitet werden kann und man erhält die gleichzeitige und gleichgroße Winkelauflösung in Azimut-Richtung sowie in Elevations-Richtung. Dies ist besonders wesentlich bei der Detektierung von fliegenden Zielen. Auf diese Weise entsteht zu den Lichtleiterbündelreihen in Elevationsrichtung eine gleichartige Lichtleiterbündelreihe in Azimutrichtung. Jeder der Lichtleiterbündelreihen ist eine Detektorstufe zur Erzeugung eines Stopsignals zugeordnet.

Für die Laufzeitmeßschaltung ist zur Messung der Laufzeitdifferenz sowohl in Elevations- als auch in Azimut-Richtung eine gemeinsame Detektorstufe zur Schaffung des Startsignals vorgesehen.

Im folgenden wird die Erfindung anhand eines in den Fig. I bis 4 dargestellten Ausführungsbeispieles beschrieben. Es zeigen

Fig. I eine schematische Darstellung der Detektorvorrichtung mit in Azimut-Ebenen und in Elevations-Ebenen angeordneten Einzeloptiken mit Lichtleitern,

Fig. 2 einen Querschnitt durch einen Sensorkopf der Detektorvorrichtung,

Fig. 3a und 3b die Lasersignalaufbereitung in der zugehörigen Detektorstufe und

Fig. 4 eine schematische Schaltungsanordnung zur Signalverarbeitung und Auswertung.

Gemäß Fig. I ist mit I der Sensorkopf einer Detektorvorrichtung bezeichnet. Dieser Sensorkopf ist ein Kugelgehäuse, welches eine Vielzahl von Öffnungen in Azimut-Richtung und in Elevations-Richtung aufweist. In diesen Gehäuseöffnungen befinden sich Einzeloptiken die in Fig. I stellvertretend für alle Optiken mit 2 bezeichnet sind. Die Einzeloptiken bilden in den jeweiligen Azimut-Ebenen und in den Elevations-Ebenen Gruppen für die nachfolgende Auswertung. Hinter den Einzeloptiken befinden sich jeweils drei Lichtleiter. Das Ende des jeweiligen Lichtleiters ist in der Brennebene bzw. Abbildungsebene jeder Einzeloptik 2 angeordnet. Der erste Lichtleiter der ersten Einzeloptik der obersten Azimut-Ebene ist mit $L_{111}$ bezeichnet, während der um I80° versetzte erste Lichtleiter dieser Ebene mit $L_{11n}$ bezeichnet ist. Der erste Lichtleiter der ersten Einzeloptik der darunter befindlichen Azimut-Ebene ist $L_{121}$ bezeichnet usw.. Der erste Lichtleiter der ersten Einzeloptik der untersten Azimut-Ebene ist mit $L_{1n1}$ bezeichnet, während der um I80° versetzte Lichtleiter mit $L_{1nn}$ bezeichnet ist.

Alle diese ersten Lichtleiter $L_{111}$ bis $L_{1nn}$ weisen gleiche Länge auf und sind in einem Bündel zu einer Optik 3 geführt, die zur Abbildung des stirnseitigen Endes auf eine Detektoreinrichtung 4 dient. Diese Detektoreinrichtung oder Stufe 4 wird auch als Startstufe bezeichnet.

Der zweite Lichtleiter der ersten Einzeloptik der obersten Azimut-Ebene ist mit $L_{211}$ bezeichnet, wäh-

rend der um 180° versetzte Lichtleiter mit $L_{21n}$ bezeichnet ist. Der zweite Lichtleiter der ersten Einzeloptik der untersten Azimut-Ebene ist mit $L_{2n1}$ bezeichnet, während der um 180° versetzte Lichtleiter die Bezeichnung $L_{2nn}$ trägt. Die zweiten in einer gemeinsamen Elevations-Ebene befindlichen Lichtleiter $L_{211}$ bis $L_{2n1}$ sind als Lichtleiterbündel zusammengeführt und zu einer zweiten Empfangsoptik 5 geführt, welche die stirnseitigen Enden dieser Lichtleiter auf einer zweiten Detektorstufe abbildet. Diese zweiten Lichtleiter $L_{211}$ bis $L_{2n1}$ der ersten Elevations-Ebene weisen die gleiche Länge auf. Wie aus der Fig. I ersichtlich ist, befinden sich diese ersten Einzeloptiken senkrecht zu den Azimut Ebenen.

Die einzelnen zweiten Lichtleiter der Einzeloptiken, die um 180° versetzt sind gegenüber den zuvor erwähnten ersten Einzeloptiken, in einer gemeinsamen Elevations-Ebene liegen, und die mit $L_{21n}$ bis $L_{2nn}$ bezeichnet sind, sind als Bündel zur gleichen Empfangsoptik 5 geführt. Sie weisen untereinander gleiche Länge auf. Jedoch sind diese Lichtleiter länger ausgebildet als die zuvor erwähnten Lichtleiter der ersten Einzeloptiken. Gleiches gilt für die einzelnen zweiten Lichtleiter derjenigen Einzeloptiken die jeweils in einer gemeinsamen Elevations-Ebene liegen und welche einen dazwischen liegenden Azimut-Winkel bezogen auf die ersten Einzeloptiken aufweist.

Das bedeutet, daß in Abhängigkeit vom jeweiligen Azimut-Winkel in jeder der Azimut-Ebenen eine gleich große Empfindlichkeit und Auflösung eines eintreffenden Laserimpulses möglich ist. Die mit 6 bezeichnete Detektorstufe wird auch als erste Stopstufe bezeichnet. Die abgestuften Längenunterschiede zwischen den Lichtleitern von benachbarten Elevations-Ebenen sind gleich groß. Dies bedeutet, daß der gemessene Längenunterschied im bezug auf die ersten Lichtleiter ein Maß für den Azimut-Winkel ist unter dem ein ankommender Laserimpuls auf den Kugelkopf der Detektorvorrichtung auftrifft.

Der dritte Lichtleiter der ersten Einzeloptik der obersten Azimut-Ebene ist mit $L_{311}$ bezeichnet, während der um 180° versetzte dritte Lichtleiter der gleichen Ebene mit $L_{31n}$ bezeichnet ist. Sämtliche Lichtleiter $L_{311}$ bis $L_{31n}$ sind als Bündel zusammengeführt und zu einer Empfangsoptik 7 geführt, die das stirnseitige Bündelende auf eine Detektorstufe 8 abbildet, die auch als zweite Stopstufe bezeichnet ist. Die vorgenannten Lichtleiter $L_{311}$ bis $L_{31n}$ weisen gleiche Länge auf.

Der dritte Lichtleiter der ersten Einzeloptik der untersten Azimut-Ebene ist mit $L_{3n1}$ bezeichnet. Der um 180° versetzte Lichtleiter der gleichen Ebene weist das Bezugzeichen $L_{3nn}$ auf. Diese Lichtleiter $L_{3n1}$ bis $L_{3nn}$ sind als Bündel zusammengefaßt und führen zur vorgenannten Empfangs-oder Abbildungsoptik 7, so daß auch deren stirnseitige Enden auf der dritten Detektorstufe 8 (zweite Stopstufe) abgebildet werden. Diese Lichtleiter $L_{3n1}$ bis $L_{3nn}$ weisen untereinander gleiche Länge auf. Jedoch ist die Länge dieses Lichtleiterbündels unterschiedlich gegenüber der Länge der Lichtleiter der obersten Azimut-Ebene. Es ist auch denkbar, daß die Längenabstufung der einzelnen Lichtleiter der verschiedenen Azimut-Ebenen in anderer Weise erfolgt. So ist es beispielsweise denkbar, daß die Äquator-Ebene des Kugelkopfes als Ursprungs-Azimut-Ebene betrachtet wird und daß die entsprechenden dritten Lichtleiter dieser Ebene eine erste Länge aufweisen, während die Längen der Lichtleitergruppen der darüber und darunter befindlichen Azimut-Ebenen bei Symmetrie jeweils die gleiche Länge aufweisen.

Die Abstufung ist entsprechend gewählt.

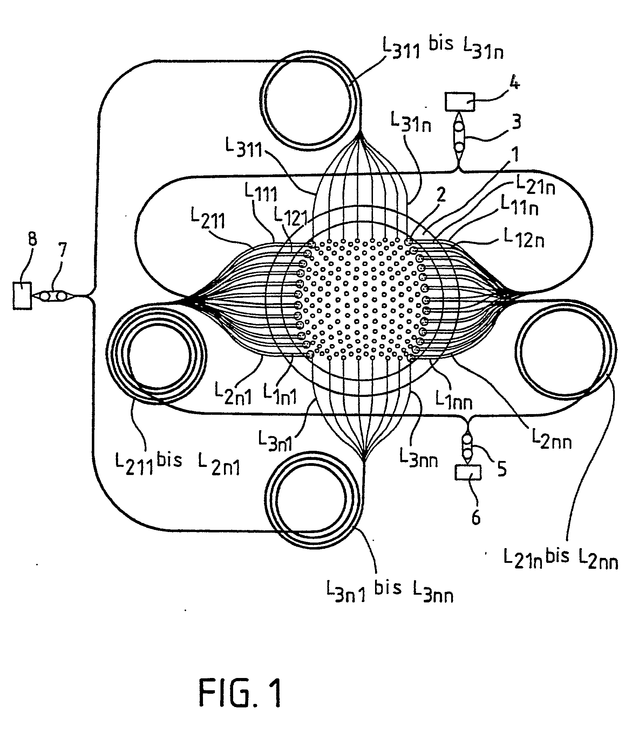

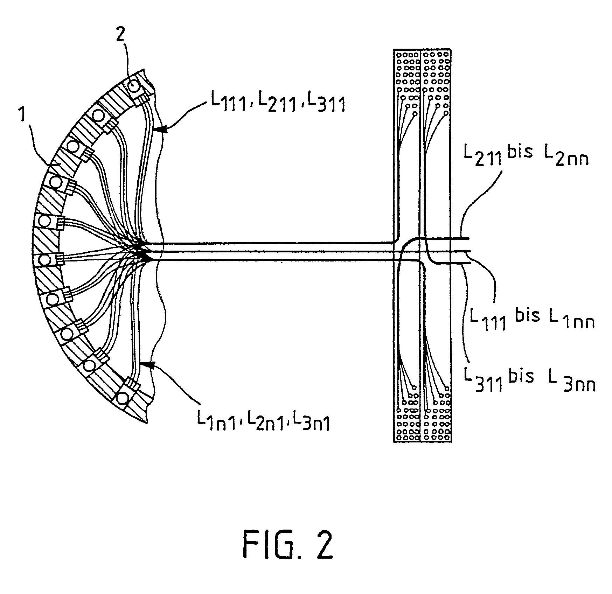

Fig. 2 zeigt einen Querschnitt durch den Kugelsensorkopf I teilweise geschnitten. Die den Teilen von Fig. I entsprechenden Teile sind mit gleichen Bezugszeichen versehen.

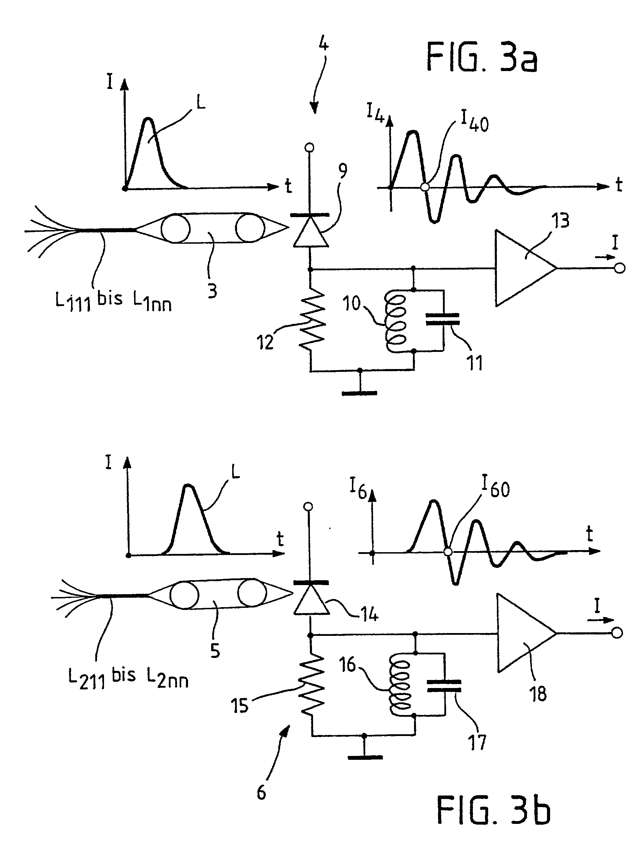

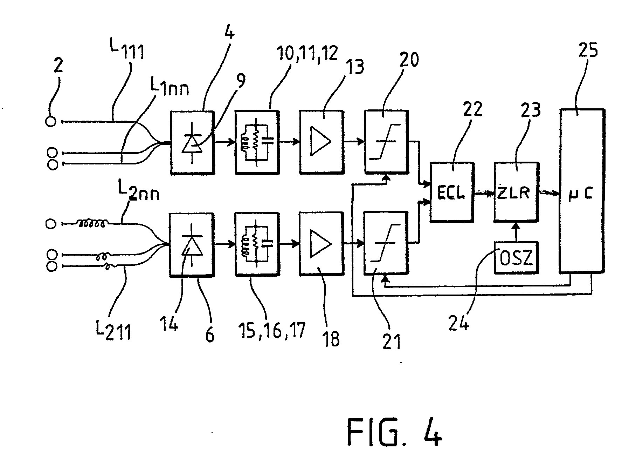

In Fig. 3a sind die ersten Lichtleiter $L_{111}$ bis $L_{1nn}$ zur Abbildungsoptik 3 geführt um die stirnseitigen Enden dieser Lichtleiter auf einer Photodiode 9 der ersten Detektorstufe 4 abzubilden. Die Photodiode 9 ist mit einem gedämpften Schwingkreis in Reihe geschaltet der aus einer Spule I0, einem Kondensator II und einem Widerstand I2 besteht. Dieser parallele Schwingkreis ist außerdem mit einem Verstärker I3 verbunden an dessen Ausgang ein Stromfluß I auftritt. Über das Lichtleiterbündel $L_{111}$ bis $L_{1nn}$ wird ein Laserimpuls L übertragen, der einen in der Fig. 3 gezeigten zeitlichen Stromverlauf aufweist. Es sei angenommen, daß die Breite dieses Laserimpulses 50 ns beträgt. Die Periodendauer des gedämpften Schwingkreises ist so gewählt, daß sie den vierfachen Wert der impulsdauer T = 50 ns aufweist. Dies bedeutet, daß die Resonanzfrequenz für den gedämpften Schwingkreis 5 MHz beträgt. Der gedämpfte Schwingungsverlauf des Stroms des gedämpften Schwingungskreises ist ebenfalls in Fig. 3a gezeigt. In einer Nachfolgestufe, die in Fig. 3a nicht gezeigt ist, wird der erste Nulldurchgang $I_{40}$ der gedämpften Schwingung festgestellt und als Startsignal für eine in Fig. 4 gezeigte Zählschaltung verwendet.

In Fig. 3b ist das zweite Lichtleiterbündel $L_{211}$ bis $L_{2nn}$ gezeigt, das zur Abbildungsoptik 5 der Detektorstufe (ersten Stopstufe) 6 geführt ist. Die Photodiode dieser Detektorstufe ist mit I4 bezeichnet. Die Photodiode I4 ist mit einem gedämpften Schwingkreis verbunden, der aus einem Widerstand I5, einer Spule I6 und einem Kondensator I7 besteht. Dieser Schwingkreis weist eine Resonanzfrequenz auf, die gleich der Resonanzfrequenz des in Fig. 3a gezeigten Schwingkreises ist. Das bedeutet, daß die beiden Schwingkreise identisch ausgebildet sind. Mit I8 ist ein Folgeverstärker bezeichnet. Wie aus Fig. 3b ersichtlich ist, trifft aufgrund der längeren Ausbildung der Lichtleiter der Laserimpuls verzögert auf die Empfangsoptik 5 und demzufolge auf die Photodiode I4 auf. Entsprechend verzögert setzt auch die gedämpfte Schwingung ein. Der erste Nulldurchgang dieser gedämpften Schwingung ist mit $I_{60}$ bezeichnet. Dieser erste Nulldurchgang ist verzögert gegenüber dem ersten Nulldurchgang der unverzögerten gedämpften Schwingung von Fig. 3a. Die Differenz beider ersten Nulldurchgänge ist die Verzögerungszeit, welche ein Maß für den Azimut-Winkel des eintreffenden Laserstrahls ist.

In Fig. 4 sind die den Teilen der vorhergehenden Figuren entsprechenden Teile mit gleichen Bezugszeichen versehen. Der Startkanal wird gebildet durch die ersten Lichtleiter $L_{111}$ bis $L_{1nn}$ in Verbindung mit der ersten Detektorstufe 5, dem Schwingkreis 10, 11, 12 und dem Folgeverstärker 13 sowie einer nachgeschalteten Schwellwertstufe 20 mit veränderbarem Ansprechpegel.

Der zweite Kanal oder auch erste Stopkanal wird gebildet durch die zweiten Lichtleiter $L_{211}$ bis $L_{2nn}$, der zweiten Detektorstufe (erste Stopstufe) mit der Photodiode 14, dem Schwingkreis 15, 16, 17, dem Folgeverstärker 18 und einer nachgeordneten Schwellwertstufe 21 mit veränderbarem Ansprechpegel. Die Ausgänge der beiden Schwellwertstufen 20 und 21 sind zu einer Emitter gekoppelten Logikschaltung 22 geführt, in der eine Analogdigitalwandlung der empfangenen Signale durchgeführt wird. Außerdem wird in dieser Schaltungsstufe 22 eine Nullpunktsdurchgangsermittlung durchgeführt. Dieser Emitter gekoppelten Logikschaltung 22 ist eine Zählschaltung 23 nachgeordnet, die durch einen Oszillator 24 getaktet wird. Die Zählschaltung 23 ist ausgangsseitig mit einem Mikrocomputer 25 verbunden, der Steuerausgänge aufweist, die zu Steuereingängen der Schwellwertschaltungen 20 und 21 führen. Mit Hilfe des Mikrocomputers 25 wird in Abhängigkeit von der Hintergrundbeleuchtung der Schwellwert automatisch nachgeregelt um Störsignale soweit als möglich zu vermeiden.

**Patentansprüche**

1. Detektorvorrichtung zur richtungsabhängigen Erfassung von Laserstrahlung mit einer ersten und zweiten, jeweils einen optoelektrischen Wandler (9, 14) aufweisenden Detektorstufe (4, 6), mit einer Vielzahl von Einzeloptiken (2), die insgesamt einen vorgegebenen Gesamtraumwinkel erfassen, wobei die Raumwinkel benachbarter Einzeloptiken einander überlappen und wobei die Einzeloptiken jeweils in Azimut-Ebenen angeordnet sind, mit einem ersten und zweiten Lichtleiter ($L_{11n}$ bis $L_{1nn}$ bzw. $L_{21n}$ bis $L_{2nn}$) für jede Einzeloptik, wobei die Lichtleiter jeweils zur ersten und zweiten Detektorstufe führen und sämtliche ersten zur ersten Detektorstufe führenden Lichtleiter gleiche Länge aufweisen, während die zu der zweiten Detektorstufe führenden zweiten Lichtleiter untereinander unterschiedlich lang sind, wobei ihre Längen in Azimut-Winkelrichtung gesehen zur Bildung von unterschiedlichen Laufzeiten abgestuft sind und mit einer Laufzeitmeßschaltung (23, 24), die mit der ersten und zweiten Detektorstufe in Verbindung steht, um Anfang und Ende der Laufzeitmessung und hiervon abhängig den Azimut-Winkel der einfallenden Laserstrahlung festzustellen, dadurch gekennzeichnet, daß jeder der Einzeloptiken (2) zusätzlich ein dritter Lichtleiter ($L_{311}$ bis $L_{3nn}$) zugeordnet ist und daß die dritten Lichtleiter ($L_{311}$ bis $L_{3nn}$) von jeweils in der gleichen Elevationsebene befindlichen Einzeloptiken (2) untereinander unterschiedlich lang un in Elevations-Winkelrichtung abgestuft sind und zu einer dritten Detektorstufe (8) mit opto-elektrischem Wandler führen, daß der opto-elektrische Wandler jeder Detektorstufe (4, 6) jeweils mit einem gedämpften Schwingkreis (10 bis 12; 15 bis 17) als Filterstufe verbunden ist, der so ausgelegt ist, daß die Dauer der Anstiegsphase einer Resonanzschwingung bis zum Erreichen der Amplitude größer oder gleich der typischen Dauer bzw. Anstiegszeit eines mindestens auf einer Einzeloptik (2) ankommenden Laserimpulses ist und daß dem gedämpften Schwingkreis der Detektorstufen (4, 6, 8) jeweils eine Nulldurchgangsstufe (20, 21) nachgeordnet ist, um jeweils bei einem bestimmten Nulldurchgang (13, 19) der betreffenden gedämpften Schwingungen ein Start- bzw. Stopsignal für die Laufzeitmeßschaltung zu erzeugen.

2. Detektorstufe nach Anspruch 1, dadurch gekennzeichnet, daß sämtliche dritte Lichtleiter ($L_{311}$ bis $L_{3nn}$), die hinter den in der jeweils gleichen Azimutebene befindlichen Einzeloptiken (2) angeordnet sind, gleich lang sind.

3. Detektorstufe nach Anspruch 1 oder 2, dadurch gekennzeichnet, daß sämtliche zweite Lichtleiter ($L_{211}$–$L_{2nn}$), die hinter den in der jeweils gleichen Elevationsebene befindlichen Einzeloptiken angeordnet sind, gleich lang sind.

4. Detektorvorrichtung nach den Ansprüchen 1 bis 3, dadurch gekennzeichnet, daß zur Unterscheidung der zweiten und dritten Laufzeiten der zweiten und dritten Lichtleiter ($L_{211}$ bis $L_{2nn}$, $L_{311}$ bis $L_{3nn}$) voneinander die entsprechenden Laufzeitsignale mit unterschiedlichen Kennungen versehen sind oder in getrennten Kanälen verarbeitet werden.

5. Detektorvorrichtung nach den Ansprüchen 1 bis 4, dadurch gekennzeichnet, daß eine Auswerte-Schaltung eine Fehlsignalschaltung aufweist, die eine Zeitfenster-Stufe enthält, welche die zu den Detektorstufen (4, 6, 8) gelangenden Signale prüft und welche ein Fehlersignal erzeugt, wenn die Zeit zwischen dem Startsignal und dem Stopsignal größer ist als die maximale Laufzeitdifferenz zwischen dem längsten zweiten Lichtleiter und dem ersten Lichtleiter und daß bei einer vorgegebenen Anzahl von festgestellten Fehlersignalen eine Schaltmaßnahme ausgelöst wird.

6. Detektorvorrichtung nach den Ansprüchen 1 bis 5, dadurch gekennzeichnet, daß die beiden gedämpften Schwingkreise eine Resonanz-Periodendauer aufweisen, die zumindest gleich dem vierfachen Wert, vorzugsweise dem achtfachen Wert der Laser-Impulsdauer bzw. der Laser-Anstiegszeit eines Laserimpulses ist.

7. Detektorvorrichtung nach einem der Ansprüche 1 bis 6, dadurch gekennzeichnet, daß dem gedämpften Schwingkreis der Detektorstufen (4, 6, 8) als Nulldurchgangsstufe jeweils eine Schwellwertstufe (20, 21) mit variabler Triggerschwelle nachgeordnet ist, die durch eine Störsignal-Schaltung (25) veränderbar ist, in der die Häufigkeit der Störsignalspitzen, vorzugsweise von Rauschsignalspitzen insbesondere der Hintergrundbeleuchtung festgestellt werden und durch die Triggerschwelle entsprechend nachgeregelt wird.

8. Detektorvorrichtung nach einem der Ansprüche 1 bis 7, dadurch gekennzeichnet, daß die Schwellwertstufen (20, 21) mit einer digitalen Logikschaltung (22) verbunden sind.

9. Detektorvorrichtung nach einem der Ansprüche 1 bis 8, dadurch gekennzeichnet, daß die Laufzeitmeßschaltung eine durch einen Oszillator (24) getaktete Zählschaltung (23) ist.

10. Detektorvorrichtung nach einem der Ansprüche 1 bis 9, dadurch gekennzeichnet, daß die Zählschaltung (23) mit einem Mikrocomputer (25) verbunden ist, der eine Steuerverbindung zu einem Steuereingang jeder der beiden Schwellwertschaltungen aufweist.

11. Detektorvorrichtung nach den Ansprüchen 1 bis 10, dadurch gekennzeichnet, daß die Resonanzfrequenz der gedämpften Schwingkreise im Bereich von einigen MHz liegt und daß die Schwingkreisbandbreite so ausgelegt ist, daß Laserimpulse mit einer Dauer und Anstiegszeit von 10 ns bis 200 ns erfaßt werden.

**Claims**

1. Detector device for directional detection of laser radiation with a first and a second detector stage (4, 6), each including an opto-electrical transducer (9, 14), with a plurality of single optics (2) which together cover a given total-space angle, in which respect the space angles of adjacent single optics overlap each other and in which respect the single optics are each arranged in azimuth planes, with a first and a second light guide (L11n to L1nn or L21n to L2nn respectively) for each single optics in which respect the light guides each lead to the first and second detector stage and all first light guides leading to the first detector stage are of the same length, whereas the second light guides leading to the second detector stage are of different lengths with their length, seen in the direction of azimuth angle, stepped to create different transit times, and with a transit-time-measuring circuit (23, 24) which is connected with the first and second detector stage for determining the start and end of transit-time-measuring and in dependence hereon the azimuth angle of the incoming laser radiation, characterised in that each of the single optics (2) is additionally associated with a third light guide (L311 to L3nn) and that the third light guides (L311 to L3nn) of single optics (2), positioned in the same plane of elevation, are of different lengths relative to each other and stepped in the direction of the angle of elevation and lead to a third detector stage (8) which includes an opto-electrical transducer, that the opto-electrical transducers of each detector stage (4, 6) are each connected with a damped resonant circuit (10 to 12; 15 to 17) which is a filtering stage, arranged such that the duration of the build-up phase of a resonant oscillation up to arriving at the amplitude is longer than or equal to the typical duration or build-up period respectively of a laser pulse hitting at least one single optics (2) and that the damped resonant circuit of the detector stages (4, 6, 8) is each followed by a zero-crossing stage (20, 21) so as to produce at a certain zero crossing (13, 19) of the respective damped oscillations a start- or stop signal respectively for the transit-time measuring circuit.

2. Detector stage according to claim 1, characterised in that all third light guides (L311 to L3nn), arranged behind the single optics (2) in the respective same azimuth plane, are of the same length.

3. Detector stage according to claim 1 or 2, characterised in that all second light guides (L211 L2nn), arranged behind the single optics in the respective same azimuth plane, are of the same length.

4. Detector device according to claims 1 to 3, characterised in that the respective transit-time signals are provided with different characteristics or are processed in separate channels in order to be able to differentiate between the second and third transit times of the second and third light guides (L211 to L2nn, L311 to L3nn).

5. Detector device according to claims 1 to 4, characterised in that an evaluation circuit includes a void-signal circuit which comprises a time-window stage which checks the signals arriving at the detector stages (4, 6, 8) and which produces a void signal if the time between the start signal and the stop signal is longer than the maximum transit-time difference between the longest second light guide and the first light guide and that a switch operation is triggered at a pre-given number of detected void signals.

6. Detector device according to claims 1 to 5, characterised in that the two damped resonant circuits have a resonance-duration period which is equal to at least four times, preferably eight times the value of the laser-pulse duration or the laser-build-up time of a laser pulse respectively.

7. Detector device according to one of the claims 1 to 6, characterised in that the damped resonant circuit of the detector stages (4, 6, 8) as zero-crossing stage is each followed by a threshold stage (20, 21) with variable trigger stage which is changeable by a void-signal circuit (25) wherein the frequency of interference-signal peaks, preferably of noise-signal peaks in particular of the background illumination, is determined and corrected accordingly by the trigger stage.

8. Detector device according to one of the claims 1 to 7, characterised in that the threshold stages (20, 21) are linked to a digital logic circuit (22).

9. Detector device according to one of the claims 1 to 8, characterised in that the transit-time-measuring circuit is a counting circuit (23), pulsed by an oscillator (24).

10. Detector device according to one of the claims 1 to 9, characterised in that the counting circuit (23) is linked to a microcomputer (25) which is provided with a control link to a control input of each of the two threshold circuits (20, 21) for the purpose of threshold matching.

11. Detector device according to claims 1 to 10, characterised in that the resonant frequency of the damped resonant circuit lies in the range of a few MHz and that the resonant-circuit bandwidth is laid out such that laser pulses of a duration and build-up period of 10 ns to 200 ns are registered.

**Revendications**

1. Dispositif détecteur pour la détection directionnelle de rayonnement laser, constitué par un premier et un deuxième étages détecteurs (4, 6) comportant chacun un transducteur opto-électrique (9, 14), par une multitude d'optiques individuelles (2) qui captent ensemble un angle solide global prédéterminé, les angles solides d'optiques individuelles voisines se chevauchant réciproquement et les optiques individuelles étant respectivement placées dans des plans azimutaux, par un premier et un deuxième guides de lumière (L$_{11n}$ à L$_{1nn}$) et (L$_{21n}$ à L$_{2nn}$) pour chaque optique individuelle, les guides de lumière aboutissant respectivement au premier et au deuxième étages détecteurs et tous les premiers guides de lumière aboutissant au premier étage détecteur ayant la même longueur, tandis que les deuxièmes guides de lumière, aboutissant au deuxième étage détecteur, ont des longueurs différentes entre eux, leurs longueurs, vues dans le sens de l'angle azimutal, étant étagées pour former différents temps de parcours, et par un circuit de mesure des temps de parcours (23, 24) qui est raccordé au premier et au deuxième étages détecteurs pour déterminer le début et la fin de la mesure des temps de parcours et en déduire l'angle azimutal du rayonnement laser incident, caractérisé par le fait qu'à chacune des optiques individuelles (2) est associé en plus un troisième guide de lumière (L$_{311}$ à L$_{3nn}$), que les troisièmes guides de lumière (L$_{311}$ à L$_{3nn}$) d'optiques individuelles (2) se trouvant respectivement dans le même plan d'élévation sont de longueurs différentes entre eux, sont étagés dans le sens de l'angle d'élévation et aboutissent à un troisième étage détecteur (8) muni d'un transducteur opto-électrique, que le transducteur opto-électrique de chaque étage détecteur (4, 6) est respectivement relié à un circuit oscillant amorti (10 à 12, 15 à 17) en tant qu'étage filtrant qui est établi de manière que la durée de la phase de montée d'une oscillation de résonance jusqu'à l'atteinte de l'amplitude soit plus grande ou égale à la durée ou au temps de montée normale d'une impulsion laser arrivant au moins sur une optique individuelle (2), et qu'en aval du circuit oscillant amorti des étages détecteurs (4, 6, 8) est respectivement installé un étage de passage par zéro (20, 21) pour produire chaque fois à un passage par zéro déterminé (13, 19) des oscillations amorties concernées un signal de démarrage et d'arrêt pour le circuit de mesure des temps de parcours.

2. Etage détecteur selon la revendication 1, caractérisé par le fait que tous les troisièmes guides de lumière (L$_{311}$ à L$_{3nn}$), qui sont placés derrière les optiques individuelles (2) se trouvant dans le même plan azimutal, sont d'égale longueur.

3. Etage détecteur selon la revendication 1 ou 2, caractérisé par le fait que tous les deuxièmes guides de lumière (L$_{211}$–L$_{2nn}$), qui sont placés derrière les optiques individuelles se trouvant dans le même plan d'élévation, sont d'égale longueur.

4. Dispositif détecteur selon les revendications 1 à 3, caractérisé par le fait que pour différencier les deuxièmes et les troisièmes temps de parcours des deuxièmes et des troisièmes guides de lumière (L$_{211}$ à L$_{2nn}$, L$_{311}$ à L$_{3nn}$) les uns des autres, les signaux correspondants des temps de parcours sont munis de signes d'identification différents ou sont traités dans des canaux séparés.

5. Dispositif détecteur selon les revendications 1 à 4, caractérisé par le fait qu'un circuit d'interprétation comprend un circuit de signal erroné qui contient un étage à fenêtre de temps qui examine les signaux parvenant aux étages détecteurs (4, 6, 8) et qui produit un signal d'erreur lorsque l'intervalle de temps entre le signal de démarrage et le signal d'arrêt est supérieur à la différence maximale des temps de parcours entre le plus long deuxième guide de lumière et le premier guide de lumière et qu'une mesure de coupure est déclenchée en cas d'un nombre prédéterminé de signaux d'erreur constatés.

6. Dispositif détecteur selon les revendications 1 à 5, caractérisé par le fait que les deux circuits oscillants amortis ont une durée de période de résonance qui est au moins égale à quatre fois, de préférence à huit fois, la valeur de la durée de l'impulsion laser ou du temps de montée d'une impulsion laser.

7. Dispositif détecteur selon l'une des revendications 1 à 6, caractérisé par le fait qu'en aval du circuit oscillant amorti des étages détecteurs (4, 6, 8) est respectivement monté, en tant qu'étage de passage par zéro, un étage à valeur de seuil (20, 21) à seuil de déclenchement variable qui peut être modifié par un circuit de signaux parasites (25) qui constate la fréquence des pointes de signaux parasites, de préférence des pointes de signaux de bruits, en particulier de l'éclairage de fond, et rajuste en conséquence le seuil de déclenchement.

8. Dispositif détecteur selon l'une des revendications 1 à 7, caractérisé par le fait que les étages à valeur de seuil (20, 21) sont raccordés à un circuit logique numérique (22).

9. Dispositif détecteur selon l'une des revendications 1 à 8, caractérisé par le fait que le circuit de mesure des temps de parcours est un circuit de comptage (23) commandé par un oscillateur (24).

10. Dispositif détecteur selon l'une des revendications 1 à 9, caractérisé par le fait que le circuit de comptage (23) est relié à un micro-ordinateur (25) qui est raccordé à une entrée de commande de chacun des deux circuits à valeur de seuil (20, 21) en vue du rajustement des valeurs de seuil.

11. Dispositif détecteur selon les revendications 1 à 10, caractérisé par le fait que la fréquence de résonance des circuits oscillants amortis se situe dans la zone de quelques MHz et que la largeur de bande du circuit oscillant est établie de manière à capter des impulsions laser d'une durée et d'un temps de montée de 10 ns à 200 ns.

FIG. 1

$L_{111}, L_{211}, L_{311}$

$L_{211}$ bis $L_{2nn}$

$L_{111}$ bis $L_{1nn}$

$L_{311}$ bis $L_{3nn}$

$L_{1n1}, L_{2n1}, L_{3n1}$

FIG. 2

FIG. 3a

FIG. 3b

FIG. 4